Europäisches Patentamt

European Patent Office

Office européen des brevets

(11) Numéro de publication: **0 049 646**

**A1**

## (12) DEMANDE DE BREVET EUROPEEN

(21) Numéro de dépôt: 81401300.9

(51) Int. Cl.³: **E 21 D 21/00**

(22) Date de dépôt: 13.08.81

(30) Priorité: 27.08.80 FR 8018612
10.04.81 FR 8107279

(43) Date de publication de la demande:
14.04.82 Bulletin 82/15

(84) Etats contractants désignés:
DE SE

(71) Demandeur: SOCIETE ANONYME D'EXPLOSIFS ET DE
PRODUITS CHIMIQUES
61, rue Galilée
F-75008 Paris(FR)

(72) Inventeur: Benichou, Alain Daniel
1, rue du Biez
F-21270 Pontailler sur Saone(FR)

(74) Mandataire: de Haas, Michel
Cabinet Beau de Loménie 55 rue d'Amsterdam
F-75008 Paris(FR)

(54) Procédé de scellement de boulons d'ancrage dans des terrains, au moyen d'un bloc de colle thermofusible chauffé in situ, et compositions correspondantes.

㉗ La présente invention concerne un procédé de scellement de boulons d'ancrage selon lequel on introduit une charge solide de colle thermofusible au fond du trou de forage, après quoi on fait pénétrer dans ladite charge la tige en rotation vive, ce qui provoque par échauffement la fusion de ladite colle.

On laisse ensuite la colle se resolidifier autour de la tige.

On obtient ainsi un scellement dont les propriétés mécaniques sont surprenantes, et qui ne présente pratiquement pas de retrait.

EP 0 049 646 A1

1

Procédé de scellement de boulons d'ancrage dans des terrains, au moyen d'un bloc de colle thermofusible chauffé in situ, et compositions correspondantes.

La présente invention concerne la technique de scellement, dans les galeries de mines et ouvrages analogues, de tiges ou boulons d'ancrage, à l'aide d'une colle thermofusible dont on provoque la fusion in situ.

On utilise actuellement des cartouches de scellement plus ou moins complexes, mais contenant deux types principaux de charges :

- les charges de scellement à base de matériaux thermodurcissables tels que : résines polyesters insaturés, résines polyuréthannes, résines époxydes, etc.

- et les charges de scellement à base de matériaux inorganiques, notamment à base de liants hydrauliques, ciments, plâtre, anhydrite, etc.

De telles charges présentent certains inconvénients, par exemple défaut d'élasticité du scellement, problème du retrait, problème de la qualité du scellement (en particulier si la roche comporte des fissures : avec les cartouches actuelles, ou bien les fissures ne sont pas suffisamment remplies, et la qualité du scellement s'en ressent, ou bien les fissures sont trop remplies, ce qui conduit à une perte de la charge dans ces fissures).

De plus, étant donné qu'il est nécessaire d'utiliser une cartouche contenant les divers constituants de la charge, la fabrication est longue et onéreuse, tandis que, en raison de la nature de la charge elle-même, on retrouve au moment de l'emploi des problèmes de toxicité (solvants), de risque d'inflammation, de désagrément d'emploi (obligation de mouiller certaines charges inorganiques avant l'emploi, défaut de rigidité de certaines cartouches).

La demanderesse a maintenant découvert que, de manière surprenante, on pouvait utiliser comme charge de scellement un bloc de matière thermofusible que l'on introduit au fond du trou, avant de lui fournir la quantité de chaleur nécessaire à sa fusion, après quoi on le laisse durcir à nouveau autour de la tige à sceller que l'on a introduite.

On s'est en effet aperçu que le scellement obtenu conservait une certaine élasticité, ce qui est essentiel dans l'application envisagée; présentait un retrait à peu près nul, contrairement aux charges actuelles; et colmatait les fissures de la roche dans la proportion juste convenable : en effet, la colle thermofusible va pénétrer dans la fissure lorsqu'elle sera à l'état liquide, mais se solidifiera assez vite pour ne pas pénétrer trop dans ladite fissure. On évite ainsi les pertes, ou l'inconvénient contraire d'une trop faible pénétration dans la fissure.

Les colles thermofusibles, ou "HOT MELT", sont connues maintenant depuis environ 20 ans. On les a préconisées dans l'application envisagée, mais à l'état liquide, c'est-à-dire que l'on introduisait la colle thermofusible à l'état liquéfié, directement au fond du trou, par un tube chauffé en général électriquement.

Il existe des publications assez nombreuses dans ce domaine, et l'on citera notamment la DAS 1.116.619, le brevet français n° 1.285.087 et le brevet français n° 1.253.773.

. Cette technique nécessite d'une part un appareillage coûteux et compliqué, d'emploi mal aisé au fond de la mine, et de plus il se produit une certaine solidification de la colle thermofusible avant l'introduction de la tige, ce qui pose des problèmes, tandis que le colmatage des fissures n'est pas correct, en raison du caractère liquide du produit injecté, et en raison de la pression élevée que l'on doit appliquer, ce qui conduit en général à des pertes inutiles de produit dans les fissures.

Selon l'invention, on a mis au point un procédé permettant d'utiliser directement la colle thermofusible solide au fond du trou, la chaleur nécessaire à sa fusion étant apportée in situ par la rotation de la tige elle-même.

Ainsi, dans le procédé selon l'invention, on utilise des blocs (de préférence cylindriques) de composition appropriée à base de colle thermofusible, on les place en position au fond du trou, où ils peuvent séjourner un certain temps sans inconvénient, ce qui n'est pas le cas avec le procédé antérieur, après quoi on fait pénétrer la tige à sceller, en rotation à vitesse élevée, jusqu'au fond de la charge, la rotation vive imprimée à la tige provoquant au fur et à mesure de l'avancement de celle-ci dans la masse la fusion de la colle thermofusible, laquelle est ainsi amenée progressivement à combler les fissures, entourer la tige, puis durcir sur place lorsque la rotation de la tige est achevée.

On notera que, par le procédé selon l'invention, il n'existe pas de risque de voir la tige bloquée par un durcissement prématuré de la charge, avant d'atteindre le fond du trou, en raison du fait que plus la rotation est vive, plus la fusion est rapide. Ainsi, on est toujours certain avec le procédé de l'invention de parvenir à enfoncer complètement la tige dans le trou. Au contraire, dans les procédés antérieurs, la tige pouvait être bloquée par un durcissement prématuré de la charge, ce qui obligeait ensuite à scier la partie de la tige dépassant du trou, sans compter que la qualité et la résistance mécanique du scellement étaient évidemment très affectées.

Un autre avantage important du procédé selon l'invention est que l'on peut choisir des espaces annulaires entre la tige et la paroi de roche plus faibles qu'avec les procédés antérieurs, en raison des caractéristiques particulières de pénétration de la tige dans la charge, pénétration qui est, comme nous l'avons vu ci-dessus, beaucoup plus facile que dans les procédés antérieurs. Le fait de réduire la dimension de cet espace annulaire est capital,si l'on considère le prix du scellement,pour l'utilisateur.

Le procédé selon l'invention est applicable à l'aide de colles thermofusibles appartenant à diverses classes chimiques :

- copolymères éthylène/ acétate de vinyle

- polyamides

- polyesters

- polyoléfines.

Les meilleurs résultats ont été obtenus à l'aide d'une colle thermofusible commercialisée par la Société Adhésifs et Insonorisants Modernes (S.A.I.M.) de Cosne-sur-Loire (France) sous le nom de marque "DYNAFUS 669".

Il s'agit d'une colle fusible à base de copolymères éthylène/acétate de vinyle (E.V.A.).

Sa densité à 20° C est de 0,94 ; sa viscosité à 180° C est de 100 à 120 poises, et son indice de fusion à 125° C est de 140 à 180.

Le procédé selon l'invention peut être utilisé dans toute nature de roches, et à l'aide du matériel de scellement habituellement utilisé (tiges métalliques, ou tiges en plastique polyester ou époxy renforcé de fibres de verre, voire même tiges en bois, etc.).

Selon l'invention, on a également élaboré des compositions thermofusibles particulières procurant des résultats nettement supérieurs et très bien adaptés aux problèmes spécifiques de la technique considérée.

En particulier, ces nouveaux produits permettent des cycles de boulonnage beaucoup plus rapides, et peuvent être rendus peu cassants ou non-cassants, ces deux caractéristiques ayant une grande importance industrielle.

De plus, les charges qu'ils contiennent ont permis d'abaisser fortement le coût des cartouches de scellement.

Enfin, les caractéristiques d'adhérence ont été améliorées.

Ces compositions améliorées sont des compositions thermofusibles éventuellement chargées, pour le scellement en cycles rapides de boulons d'ancrage dans des galeries de mines, ouvrages d'art, et analogues, caractérisées en ce qu'elles consistent en :

a) un mélange d'au moins deux matières thermofusibles de base choisies parmi les catégories suivantes :

i) esters résiniques thermo-plastiques et

ii) polymères d'acétate de vinyle et d'éthylène, le mélange contenant au moins une matière de chaque catégorie, et

b) éventuellement en une charge minérale, représentant alors de l'ordre des 2/3 du poids de la composition a) + b), au maximum.

Comme composants a), on a utilisé les produits suivants :

a)i)    :    (I) STAYBELITE ESTER 10 (produit commercialisé par la Société HERCULES) :

Ester résinique qui dérive de la résine colophane hydrogénée, ou

(2) FORAL 85 (produit commercialisé par la Société HERCULES) :

Ester résinique, hautement stabilisé, possédant une parfaite résistance à l'oxydation : en particulier le FORAL 85 surpasse le STAYBELITE ESTER 10 sur ce point.

a)ii)    :    (3) ELVAX 4260 et (3') ELVAX 4310

(produits commercialisés par DU PONT DE NEMOURS) (terpolymères acides d'acétate de vinyle et d'éthylène) .

ELVAX 4260 : indice de fluidité 5 à 7 g/10 min.

ELVAX 4310 : indice de fluidité 420 à 580 g/10 min.

L'indice de fluidité permet d'apprécier la viscosité relative de ces deux produits (ELVAX 4310 étant plus fluide que ELVAX 4260).

Indice d'acide (mg KOH/g de polymère) :

ELVAX 4260 : 4 à 8

ELVAX 4310 : 4 à 8

Teneur en acétate de vinyle :

ELVAX 4260 : 27-29 %

ELVAX 4310 : 24-26 %

(3") ELVAX 40 P (DU PONT DE NEMOURS)

Copolymère d'acétate de vinyle (39-42 %) et d'éthylène (EVA).

Indice de fluidité : 48-66 g/10 min.

Comme charge b), on a utilisé le sable NE 34 commercialisé par la société SIFRACO, de diamètre de grain 75-425 μ environ.

Il est possible de ne pas utiliser de charge.

Cependant, celle-ci améliore les phénomènes thermiques lors de l'introduction de la tige ou du boulon dans la cartouche placée au fond du trou de forage, et permet de réduire fortement le coût du produit.

Aussi, les compositions chargées sont-elles très nettement préférées.

Il est surprenant à ce sujet de constater que la proportion de charge peut être de l'ordre d'environ 2/3 du poids de la composition sans que celle-ci soit inutilisable.

On sait en effet que les colles thermofusibles ou "hot melts", lorsqu'elles sont chargées, ne doivent pas l'être fortement, sous peine d'une perte des propriétés adhésives.

C'est ainsi que le guide de la Société DU PONT DE NEMOURS relatif aux produits ELVAX ne préconise que 10 à 30 % de pigments.

Il est de plus surprenant de constater que, en faisant varier faiblement les proportions relatives des composants a)i) et a)ii), on peut modifier profondément certaines propriétés des compositions, notamment les rendre semi-cassantes ou non-cassantes.

Les exemples suivants illustrent l'invention sans toutefois en limiter la portée.

La technique générale de pose est la même dans tous les exemples.

Cette technique est par ailleurs tout à fait classique en elle-même, et donc connue.

## EXEMPLE 1

### Essai de boulonnage au laboratoire :

Cet essai a pour but de vérifier la qualité du scellement.

On utilise un tube PEHD (polyéthylène haute densité) de diamètre intérieur 28 mm. On introduit trois charges (diamètre 25 mm, longueur 300 mm), à l'état solide, à base de DYNAFUS 669.

La tige métallique que l'on introduit ensuite présente un diamètre de 20 mm, et est une tige crénelée de longueur 2,20 m (tige "WEMA"). On a utilisé une perforatrice pneumatique type MEUDON 860 P (7 bars), qui permet d'atteindre 800-1000 tr/min, et une glissière type MONTABERT de poussée 90 kg.

Dans les conditions ci-dessus, la tige en rotation met environ 2 min pour atteindre la profondeur de 2 m.

On observe ensuite la qualité du scellement par découpage de la paroi latérale du tube PEHD, ce qui met à nu ledit scellement.

Après 30 min, on constate un gainage homogène de la tige dans le tube plastique.

EXEMPLE 2

Essais d'arrachement au vérin :

Il s'agit également d'un essai de laboratoire, qui conduit cette fois à une mesure quantitative.

Au lieu du tube de plastique, on utilise un tube métallique de diamètre 28/34 mm et de longueur 1 m, présentant à la sortie une plaque pour l'assise du vérin. La tige est, comme dans l'exemple précédent, une tige "WEMA" de diamètre 20 mm, crénelée, de longueur 1,15 m seulement.

On utilise deux cartouches à base de DYNAFUS 669 (diamètre 25 mm; longueur 300 mm). La pose est effectuée au moyen d'une perforatrice pneumatique MEUDON 860 P (7 bars); la poussée est de 50 kg. La tige met environ 3 min pour pénétrer au travers des deux cartouches, à la vitesse d'environ 950 tr/min.

On effectue un essai de traction 24 h après la pose de la tige, au moyen d'un vérin creux hydraulique. Les résultats de cet essai sont rassemblés dans le tableau ci-dessous.

Dans ce tableau, on a représenté le pourcentage d'allongement (qui est dû en fait, dans une proportion inconnue, non seulement à l'allongement de la tige, mais aussi à un certain glissement de la tige par rapport à la charge) de la tige par rapport à sa longueur initiale, en fonction de la charge d'arrachement appliquée.

Essai de traction 24 h après la pose, au moyen d'un vérin creux hydraulique

| Charge d'arrachement (kg) | $\Delta L/L$ (%) | $\Delta L/L$ = allongement + glissement |
|---|---|---|
| 4275 | 1% | |
| 6840 | 2% | |
| 8200 | 5% | |
| 9400 | 9,4% | |
| 10260 | 18% | |

L'essai a dû être abandonné vers 11.000 kg, le tube métallique étant alors soumis à une trop forte contrainte de torsion.

On voit donc que les résultats obtenus avec ce type de charge sont tout à fait surprenants.

EXEMPLES 3 à 8

On a opéré dans cet exemple comme dans l'exemple 1, en utilisant cependant des colles thermofusibles de nature différente.

On trouvera dans le tableau I annexé les références et caractéristiques essentielles de ces résines, ainsi que les résultats obtenus.

On voit que tous les résultats obtenus sont comparables à celui obtenu dans l'exemple 1 ci-dessus.

Aucun problème de durée de vie n'a été rencontré, ce qui est un avantage déterminant pour l'homme du métier.

D'autre part, plusieurs semaines après la pose de la tige, le scellement présentait toujours une élasticité remarquable, alors que cette caractéristique fait défaut dans les charges polyester et ciment couramment utilisées.

Il est à noter également que l'on a pu réaliser en laboratoire de petits scellements de 2 à 100 cm, mais que, bien entendu, l'invention peut également être utilisée pour tous les travaux publics, par exemple pour des longueurs pouvant être comprises entre 1 et 5 m.

La composition du "Hot Melt" pourra être modifiée d'une manière connue par des fibres de verre, en particulier, ou encore des charges minérales comme la craie, le kaolin, des microsphères, de la poudre d'aluminium, etc. Les caractéristiques apportées par ces diverses charges aux colles thermofusibles sont connues de l'homme du métier. Il faut cependant noter que certaines charges, notamment les charges minérales, permettent, en augmentant le frottement sur la tige, d'exacerber le dégagement de chaleur. Cependant, il faut veiller à ne pas introduire trop de charges qui pourraient fragiliser la colle thermofusible, et donc abaisser son point de ramollissement jusqu'à une valeur qui pourrait devenir incompatible avec la température élevée qui règne dans les mines, et qui peut être de l'ordre de 40°C. Cela est d'ailleurs sans doute l'une des raisons pour lesquelles, bien qu'elle fussent connues depuis 20 ans, et bien que l'on en connaisse des applications dans le scellement des tiges et boulons d'ancrage, à l'état chauffé et liquéfié, on n'avait pas songé à les employer à l'état solide, malgré les avantages manifestes que l'on obtient, et qui sont d'ailleurs en eux-mêmes surprenants, notamment si l'on considère la résistance à l'arrachement.

Exemples concernant des compositions perfectionnées :

EXEMPLES A, B, C, D :

On a préparé par mélange, fusion et refroidissement, les compositions (1) à (4) indiquées dans le tableau II ci-après.

Ces compositions sont du type chargé préféré.

On a effectué un essai de pose dont les paramètres figurent également au Tableau II.

On a enfin procédé à un essai d'arrachement.

Cet essai est mené de manière connue à l'aide d'un vérin.

La mesure est effectuée 1 heure après la pose de la tige.

On voit que les quatre produits présentent d'excellentes propriétés, sensiblement homogènes.

EXEMPLE E :

La composition (5) indiquée au Tableau II, du type non chargé, a été fabriquée comme dans l'exemple 1.

On a procédé aux mêmes opérations de pose et d'arrachement.

On voit que la caractéristique d'arrachement est sensiblement supérieure.

Cependant, si l'on tient aussi compte du prix de la composition, la formule (4) sera préférée.

EXEMPLES F et G :

Des essais de boulonnage dans des éprouvettes en béton ont été effectués en laboratoire sur les compositions (4) et (5) du Tableau II.

Les résultats sont rassemblés dans le Tableau III ci-après.

Ces résultats mettent en évidence la brièveté du temps d'introduction par rapport aux cartouches décrites dans le brevet principal, si l'on ramène à des valeurs comparables.

Ceci représente un avantage industriel décisif qui n'est pas obtenu si l'on utilise les composants de base a)i) ou a)ii) seuls, avec ou sans charge.

EXEMPLE H :

Dans les conditions suivantes (formule 4) :

- diamètre de la tige : 18 mm (crenelée)

- diamètre de foration : 22,5 mm.

- longueur du scellement dans le béton : 500 mm.

- du point de vue pose :

. poussée : 400 kg

. vitesse de rotation : 420 t/min.

. temps de rotation : 60 sec.

Un essai de traction après 24 h a conduit à la rupture de la tige sous 18 tonnes.

EXEMPLES I, J, K, L, M :

En modifiant légèrement les proportions des composants a)i) et a)ii), on est parvenu à modifier de façon considérable, et donc surprenante, certaines propriétés physiques des cartouches et notamment à les rendre semi-souples ou totalement souples, donc non-cassantes.

Ceci peut représenter un avantage déterminant pour l'homme de métier.

I. Exemple de formulation "semi-souple" :

| FORAL 85 | : | 325 g | 21,5 % en poids |
|---|---|---|---|
| ELVAX 4310 | : | 175 g | 11,5 % en poids |
| Sable NE 34 | : | 1000 g | 67 % en poids |
| Taux d'adhérence : | | 44 kg/cm2 | |

J. Exemple de formulation "semi-souple" :

| FORAL 85 | : | 375 g | 25 % | en poids |
|---|---|---|---|---|
| ELVAX 4310 | : | 87,5 g | 5,5 % | en poids |
| ELVAX 40 P | : | 37,5 g | 2,5 % | en poids |
| Sable NE 34 | : | 1000 g | 67 % | en poids |

Essai mécanique : taux d'adhérence 33 kg/cm2.

Produit légèrement fragile.

Temps de rotation pour arriver au fond : 2 min. 20 sec.

K. Exemple de formulation "semi-souple" :

| FORAL 85 | : | 350 g | 23 % | en poids |
|---|---|---|---|---|
| ELVAX 4310 | : | 105 g | 7 % | en poids |
| ELVAX 40 P | : | 45 g | 3 % | en poids |

Sable NE 34   :     1000 g            67 %   en poids

Essai mécanique : taux d'adhérence   35 kg/cm2.

Formule plus souple que la précédente.

Temps de rotation pour arriver au fond : 2 min. 15 sec.

L. Exemple de formulation "souple" :

FORAL 85     :     310 g          20,3 %   en poids

ELVAX 4310   :     190 g          12,7 %   en poids

Sable NE 34   :     1000 g           67 %   en poids

Taux d'adhérence : 27 kg/cm2.

M. Exemple de formulation "très souple" :

FORAL 85     :     375 g            25 %   en poids

ELVAX 4310   :     -                      -

ELVAX 40 P   :     125 g             8 %   en poids

Sable NE 34  :     1000 g           67 %   en poids

Essai mécanique : taux d'adhérence 47 kg/cm2.

Produit très souple.

Temps de rotation pour arriver au fond : 2 min. 30 sec.

On voit qu'une légère diminution de la proportion du composé a)i) se traduit par une augmentation sans rapport de la souplesse, mais aussi par une réduction du taux d'adhérence.

On voit également que, à taux égal de FORAL 85, une diminution du taux de ELVAX 4310 et une augmentation de celui de ELVAX 40 P augmente la souplesse de la composition.

L'homme de métier, compte tenu des indications ci-dessus et du cas d'espèce (nature de la roche, du boulon, caractéristiques du forage, etc.) saura réaliser le compromis adéquat.

EXEMPLES N et O :

Présentation en granulés :

Les compositions selon l'invention présentent l'intérêt de pouvoir aussi être utilisées sous forme d'un mélange de granulés, la préparation de la composition se limitant alors au simple mélange des composants de base de type a) (qui sont produits habituellement en granulés) et éventuellement de la charge b).

Malgré le caractère particulaire de la composition, on obtient un mélange correct lors de l'introduction de la tige, et donc les propriétés souhaitées pour le scellement.

N : Dans un tube en verre de Ø 10 mm et de longueur 100 mm, on a mélangé les composants suivants :

STAYBELITE ESTER 10 (granulés) 50 % en poids

ELVAX 4260 (granulés) 50 % en poids.

On a effectué un essai de pose comme indiqué dans le tableau II.

Le taux d'adhérence est de 64 kg/cm2.

O : On opère comme dans l'exemple N, avec la composition suivante :

STAYBELITE ESTER 10 (granulés) 67 % en poids

ELVAX 4260 (granulés) 33 % en poids

Temps d'introduction 2 min. 05 sec.

Taux d'adhérence 64 kg/cm2.

/⁻à titre de comparaison avec tous les essais ci-dessus, le taux d'adhérence du béton avant glissement, sur l'acier, est de l'ordre de 30 kg/cm2⁻/.

Si l'on reprend les essais ci-dessus, on voit que le composant a)i) permet de régler la résistance mécanique et la fragilité au choc, ainsi que les caractéristiques de pénétration plus ou moins facile de la tige, et que le composant a)ii) permet de régler la souplesse finale du produit.

EXEMPLE P :

On peut réaliser la fabrication industrielle des charges de scellement selon l'invention en utilisant un tube thermoplastique en polystyrène, celui-ci constituant l'enveloppe externe.

Ce tube procure les avantages suivants :

- il permet aux charges de scellement de ne pas coller entre elles dans la caisse de conditionnement,

- il permet une certaine souplesse dans le remplissage pneumatique des trous forés,

- il permet, éventuellement, un préchauffage des charges de scellement: par exemple, une caisse de charges de scellement thermofusible pourra être mise sur le moteur d'un engin de boulonnage. L'intérêt d'un tel préchauffage est de réduire encore la durée du cycle de pose (environ de moitié).

On peut également envisager de préchauffer la tige, dans le même but.

EXEMPLE Q : (comparatif)

Une composition à 25 % en poids de FORAL 85 et 75 % de sable donne de mauvais résultats : fluidité trop importante, absence de cohésion, très forte décantation du sable, propriétés de scellement médiocres (dans les conditions d'essai de pose du Tableau II : temps d'introduction 4 min. ; essai d'arrachement : 32 kg/cm2). Ceci est attribuable à l'absence de combinaison avec un produit de type ELVAX.

EXEMPLE R : essai en mine.

On a utilisé un jumbo type B 26 C de la Société de Mécanique de Moutiers ayant les performances ci-après :

. vitesse de rotation à vide : 920 t/min.

. vitesse de rotation en charge : 580 t/min.

. couple : 12,5 mkg à 105 bars

. poussée : 950 kg.

1) CONDITIONS OPERATOIRES :

— diamètre de foration : 22 mm

— diamètre de tige : 18 mm acier lisse (type ARTOP)

— longueur de tige : 1,80 m

Avec utilisation par trou d'une charge "TF1" (formule 4 du Tableau II) Ø 18 mm, longueur 1,06 m, équipée d'une ogive à ailettes.

2) RESULTATS :

2.1 - Temps de rotation :

2.1.1 - avec des "TF1" à la température ambiante ≠ 20° C.

— essai 1 : 70 sec.

— essai 2 : 85 sec.

— essai 3 : 60 sec.

— essai 4 : 80 sec.

2.1.2 - avec des "TF1" préalablement exposées à une source
de chaleur (t ≠ 40° C).

- essai 5 : 55 sec.(exposition à la chaleur : 2 min.)
- essai 6 : 45 sec.(exposition à la chaleur : 3 min.)
- essai 7 : 35 sec.(exposition à la chaleur : 4 min.)
- essai 8 : 30 sec.(exposition à la chaleur : 5 min.)

2.2 - Essais de traction : charge "TF1"

2.2.1 - Scellement au charbon

- n° 1 : 4,500 t - 1 heure après la pose : glissement
- n° 2 : 4,700 t - 1 heure après la pose : glissement
- n° 3 : 5,000 t - 35 min. après la pose : glissement

2.2.2. - Scellement au rocher (schistes):

- n° 4 : 11,300 t - 1 heure après la pose : arrêt

2.3 - Essais de traction :

Charges de scellement classiques (polyester).

2.3.1. - au charbon :

- n° 1 : 7,000 t - 24 h après la pose : glissement
- n° 2 : 5,000 t - 24 h après la pose : glissement
- n° 3 : 7,000 t - 24 h après la pose : glissement
- n° 4 : 0,500 t - 24 h après la pose : glissement

2.3.2. - au rocher :

- n° 5 : 10,000 t - 24 h après la pose : glissement
  et allongement.

Dans le cas du charbon, "glissement" signifie que le
terrain cède.

Au contraire, dans le rocher, "arrêt" signifie que l'on
se trouve encore dans le domaine du retour élastique.

L'essai n° 4 au charbon doit être considéré comme
aberrant, le scellement n'ayant pas pris.

EXEMPLES S et T :

On a utilisé respectivement une cire et de la craie.

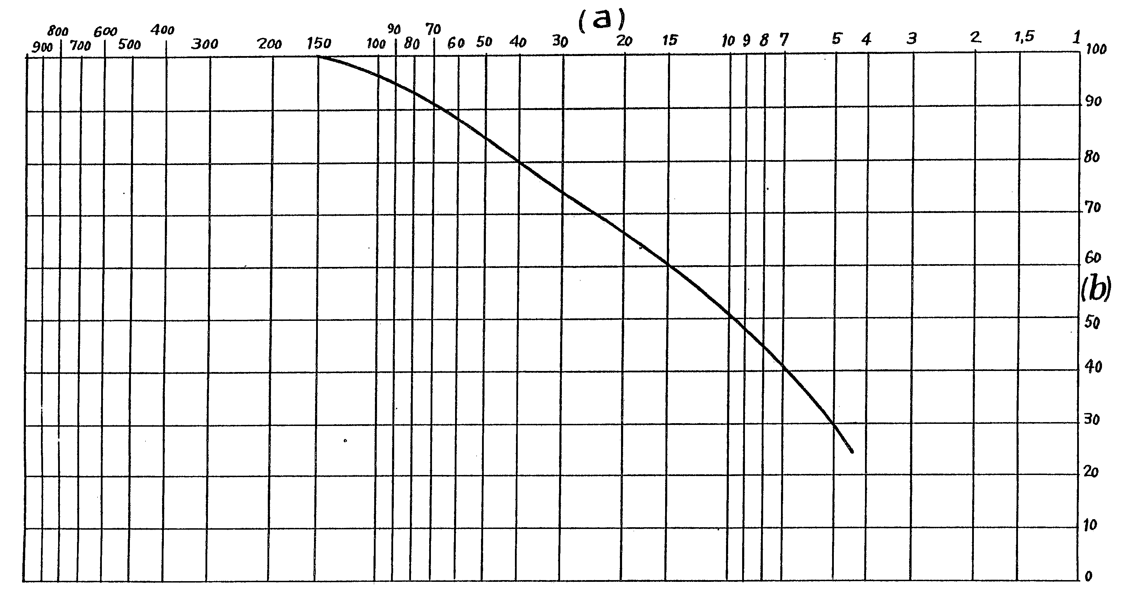

La figure unique annexée /⁻(a) : diamètre des particules (µ) et (b) : % en poids_7 représente les caractéristiques de granulométrie de la craie employée.

Les cires utilisées sont des cires microcristallines qui répondent pour leur part aux caractéristiques suivantes :

|  | NORME | MOBILWAX 2360 | MOBILWAX 2370 |
|---|---|---|---|
| Point de goutte, ° C | ASTM D-127 | 74/78 | 74/78 |
| Pénétration à l'aiguille à 25°C | ASTM D-1321 | 20/28 | 40/60 |
| Viscosité cinématique à 100° C, en cSt | ASTM D-145 | 11,4 | 14,6 |
| Couleur | ASTM D-156 | 12 | 8 |
| Odeur | ASTM D-1833 | 0 | 0 |
| Force de délamination (Alwétron) (Complexe aluminium/sulfurisé) en g/cm |  | 30 | 40 |
| F.D.A. | D 121-1156 | passe | passe |
| B.G.A. | XXV | passe | passe |

Le Tableau IV ci-après permet de comparer trois compositions selon l'invention, contenant ou non une cire ou de la craie.

On voit donc que les compositions selon l'invention, formées par la combinaison dans certaines proportions de certaines colles thermofusibles de base, et éventuellement d'une charge, présentent un ensemble de propriétés surprenantes, décisif pour l'application industrielle :

- nette réduction de la durée du cycle de boulonnage,

- aptitude au réglage de la souplesse,

- coût plus faible.

Les charges selon l'invention présentent encore d'autres avantages :

- conservation illimitée ;

- pas de risque de mauvais mélange, contrairement aux charges classiques ;

- une variation d'espace annulaire (entre la tige et le terrain) n'a que très peu d'effet sur le scellement ;

- l'arrivée de la tige au fond du trou signifie à coup sûr que le scellement est réalisé ;

- aucun risque de blocage prématuré de la tige, puisqu'il suffit alors d'augmenter la vitesse de rotation pour libérer la tige, en cas de début de blocage.

- adaptation aux petits scellements, y compris jusqu'au secteur "bricolage".

# TABLEAU I

| COLLE THERMOFUSIBLE "TERLAN" | | | | Résultats de l'essai | |
| --- | --- | --- | --- | --- | --- |
| Réf. | Nature | Point de ramollisement | Viscosité (poises) | Rotation (1) | Qualité du scellement |
| 079 | E.V.A. | 71 - 82° C | 53 à 190° C | 5mn 10 s | très bonne; comparable ou tout à fait comparable au résultat de l'exemple 1. |
| 109 | Polyamide | 104 - 107° C | 85 à 190° C | 4mn 55s | |
| 6300 | Polyester | 138 - 146° C | 800 - 1200 à 200° C | 4mn 20s | |
| PS 16 | Polyoléfine | 70 - 85° C | 35 à 120° C | 4 mn 50s | × |
| COLLE THERMOFUSIBLE "KOMMERLING" | | (2) | | | |
| SK 533 | E.V.A. | 93 | 1000 à 180°C | 3 mn 10s | × |
| SK 598 | E.T.R. | 94 | 4000 à 180°C | 4 mn 20s | |
| SK 600 | polyamide | 142 | 130 à 180°C | 3 mn 47s | |

(1) temps pour atteindre le fond du trou.
(2) point de fusion
× Pour ces deux produits, la qualité du scellement est inférieure car la ceinture reste un peu trop molle.

| C O M P O S A N T S | (1) | (2) | (3) | (4) | (5) |
|---|---|---|---|---|---|
| (1) STAYBELITE ESTER 10 | 25 % | – | 25 % | – | – |
| (2) FORAL 85 | – | 25 % | – | 25 % | 75 % |
| (3) ELVAX 4260 | 8,33 % | 8,33 % | – | – | – |
| (3') ELVAX 4310 | – | – | 8,33 % | 8,33 % | 25 % |
| (5) Sable NE 34 | 66,67 % | 66,67 % | 66,67 % | 66,67 % | – |
| **ESSAI DE POSE** | | | | | |
| Diamètre du trou : 14 mm | | | | | |
| Diamètre de la tige : 12 mm | | | | | |
| Longueur de la tige (lisse) : 200 mm | | | | | |
| Longueur de l'ancrage : 150 mm | | | | | |
| Cartouche Ø 12 – L : 100 mm | | | | | |
| Temps d'introduction (vitesse de la perforatrice pneumatique : 600 T/mn) | 3 mn 15s | 3 mn 5 s | 2 mn 10 s | 2 mn | 1 mn 5s |
| **ESSAI D'ARRACHEMENT** | | | | | |
| Taux d'adhérence (Kg/cm2) | 62 | 62 | 74 | 73 | 100 |

## TABLEAU III

| Ø trou mm | Ø de la tige mm | long. du trou mm | temps d'introduction | poussée maximum kg | vitesse (tour/mn) | type de cartouche |
|---|---|---|---|---|---|---|
| A - Avec la formule n° 4 - | | (1) Cartouche diamètre : 18 mm | - Longueur : 800 mm | | | |
| | | (2) Cartouche diamètre : 25 mm | - Longueur : 920 mm | | | |
| 22,5 | 18 (lisse) | 1 500 | 3 mn 12 s | 400 | 417 | (1) |
| 22,3 | 18 (crenelée) | 1 500 | 2 mn 30 s | 400 | 411 | (1) |
| 22,5 | 18 (crenelée) | 1 500 | 1 mn 18 s | 400 | 905 | (1) |
| 28 | 18 (crenelée) | 1 500 | 55 s | 350 | 925 | (2) |
| 28 | 20 (crenelée) | 1 500 | 2 mn 25 s | 400 | 410 | (2) |
| B - Avec la formule n° 5 - | | (1) Cartouche diamètre : 18 mm | - Longueur : 800 mm | | | |
| | | (2) Cartouche diamètre : 25 mm | - Longueur : 920 mm | | | |
| 22,4 | 18 ( lisse) | 1 500 | 1 mn 46 s | 400 | 420 | (1) |
| 22,3 | 18 (crenelée) | 1 500 | 2 mn 47 s | 450 | 417 | (1) |
| 22,3 | 18 (crenelée) | 1 500 | 1 mn 15 s | 400 | 945 | (1) |
| 22,2 | 18 (lisse) | 1 500 | 45 s | 400 | 953 | (1) |
| 28 | 18 (crenelée) | 1 500 | 58 s | 350 | 953 | (2) |

19

|  | Normale | (S) avec cire | (T) avec craie |
|---|---|---|---|
| MOBILWAX 2360 | - | 100 g | - |
| FORAL 85 | 375 g | 300 g | 375 g |
| ELVAX 4310 | 125 g | 100 g | 125 g |
| SABLE NE 34 | 1000 g | 1000 g | - |
| Craie GY 100 | - | - | 1000 g |
| Poids d'une cartouche $\emptyset$ 12 mm - longueur 100 mm | 17 g | 15 g | 18 g |
| **ESSAI DE POSE ET D'ARRACHEMENT** | | | |
| Tige lisse $\emptyset$ 12 mm - tube métallique $\emptyset$ 14 mm - longueur 150 mm - perforatrice pneumatique 600 trs/min. (7 bars) - temps de rotation pour arriver au fond | 2 min.5sec. | 1 min.50sec. | 1 min.50sec. |
| Taux d'adhérence après 1 heure | 45 kg/cm2 | 38 kg/cm2 | 60 kg/cm2 |
| **ESSAI DE POSE AVEC GLISSIERE ELECTRIQUE** | | | |
| Vitesse de rotation à vide : 420 trs/min. | | | |
| Tube métallique $\emptyset$ intérieur 28 mm - longueur 2 m | | | |
| Tige métallique $\emptyset$ 20 mm (wema) - longueur 2,2 m | | | |
| 2 charges de scellement $\emptyset$ 25 - longueur 460 mm/tube | | | |
| Temps de rotation pour arriver au fond | 2 min.25sec. | 1 min.22sec. | 1 min.41sec |

# REVENDICATIONS

1. Procédé de scellement de tiges et boulons d'ancrage dans des galeries de mines et ouvrages analogues, caractérisé en ce que l'on place au fond du trou de forage une ou plusieurs charges, de dimensions adaptées, consistant essentiellement en au moins une colle thermofusible, en ce que l'on fait ensuite pénétrer dans le trou la tige à sceller, animée d'un mouvement de rotation suffisamment rapide pour provoquer, lorsque ladite tige arrive au contact de ladite colle thermofusible, et pénètre dans lesdites charges, la fusion de la colle thermofusible par échauffement dû à la rotation de la tige, et en ce que, après pénétration de la tige jusqu'au fond du trou, on laisse la colle thermofusible liquéfiée se resolidifier pour sceller la tige.

2. Procédé selon la revendication 1, caractérisé en ce que la vitesse de rotation de la tige est comprise entre 600-800 et 1500 tr/min.

3. Procédé selon la revendication 1 ou 2, caractérisé en ce que l'on utilise comme colle thermofusible un produit choisi parmi les suivants :

- copolymères éthylène/acétate de vinyle ;
- polyamides ;
- polyesters ;
- polyoléfines ;

4. Procédé selon l'une quelconque des revendications 1 à 3, caractérisé en ce que la tige à sceller est une tige métallique, en matière plastique éventuellement chargée, ou en bois.

5. Procédé selon l'une quelconque des revendications 1 à 4, caractérisé en ce que la colle thermofusible utilisée est un copolymère éthylène/acétate de vinyle, dont la densité à 20° C est de 0,94, la viscosité à 180° C est de 100 à 120 poises, et l'indice de fusion à 125° C est de 140 à 180.

6. Compositions thermofusibles pour la mise en oeuvre du procédé selon l'une quelconque des revendications 1 à 5, caractérisées en ce qu'elles contiennent au moins une colle thermofusible choisie parmi les suivantes :

- copolymères éthylène/acétate de vinyle ;

- polyamides ;

- polyesters ;

- polyoléfines ;

7.          Compositions selon la revendication 6, caractérisées en ce que la colle thermofusible utilisée est un copolymère éthylène/ acétate de vinyle, dont la densité à 20° C est de 0,94, la viscosité à 180° C est de 100 à 120 poises, et l'indice de fusion à 125° C est de 140 à 180.

8.          Compositions thermofusibles pour la mise en oeuvre du procédé selon la revendication 1, notamment pour le scellement en cycles rapides de boulons d'ancrage dans des galeries de mines, ouvrages d'art, et analogues, caractérisées en ce qu'elles consistent en :

a) un mélange d'au moins deux matières thermofusibles de base choisies parmi les catégories suivantes :

i) esters résiniques thermoplastiques et

ii) polymères d'acétate de vinyle et d'éthylène, le mélange contenant au moins une matière de chaque catégorie, et

b) éventuellement en une charge minérale, représentant alors de l'ordre des 2/3 du poids de la composition a) + b), au maximum.

9.          Compositions selon la revendication 8, caractérisées en ce que les composants a)i) sont choisis parmi les esters résiniques dérivant du colophane et les esters résiniques hautement stabilisés possédant une résistance parfaite à l'oxydation.

10.  ,     Compositions selon la revendication 8 ou 9, caractérisées en ce que les composants a)ii) sont choisis parmi les terpolymères acides d'acétate de vinyle et d'éthylène et les copolymères d'acétate de vinyle et d'éthylène.

11.          Compositions selon l'une quelconque des revendications 8 à 10, caractérisées en ce que les composants a)i) sont choisis parmi les produits STAYBELITE ESTER 10 et FORAL 85 de la Société HERCULES.

12.          Compositions selon l'une quelconque des revendications 8 à 10, caractérisées en ce que les composants a)ii) sont choisis parmi les produits ELVAX 4260, 4310 et 40 P de la Société DU PONT.

13.          Compositions selon l'une quelconque des revendications 8 à 12, caractérisées en ce que la charge minérale b) consiste en un sable.

14.        Compositions selon la revendication 13, caractérisées en ce que ledit sable présente une granulométrie de 75-425 µ environ.

15.        Compositions selon la revendication 14, caractérisées en ce que ledit sable consiste en le Sable NE 34 de la Société SIFRACO.

16.        Composition selon l'une quelconque des revendications 8 à 15, caractérisée en ce qu'elle contient :

              STAYBELITE ESTER 10 : 25 %

              ELVAX 4260          : 8,33 %

              Sables NE 34        : 66,67 %

17.        Composition selon l'une quelconque des revendications 8 à 15, caractérisée en ce qu'elle contient :

              FORAL 85            : 25 %

              ELVAX 4260          : 8,33 %

              Sable NE 34         : 66,67 %

18.        Composition selon l'une quelconque des revendications 8 à 15, caractérisée en ce qu'elle contient :

              STAYBELITE ESTER 10 : 25 %

              ELVAX 4310          : 8,33 %

              Sable NE 34         : 66,67 %

19.        Composition selon l'une quelconque des revendications 8 à 15, caractérisée en ce qu'elle contient :

              FORAL 85            : 25 %

              ELVAX 4310          : 8,33 %

              Sable NE 34         : 66,67 %

20.        Composition selon l'une quelconque des revendications 8 à 15, caractérisée en ce qu'elle contient :

              FORAL 85            : 75 %

              ELVAX 4310          : 25 %

21.        Composition selon l'une quelconque des revendications 8 à 15, caractérisée en ce qu'elle contient :

              FORAL 85            : 21,5 % en poids

              ELVAX 4310          : 11,5 % en poids

              Sable NE 34         : 67 % en poids

22.      Composition selon l'une quelconque des revendications 8 à 15, caractérisée en ce qu'elle contient :

| | |
|---|---|
| FORAL 85 | : 25 % en poids |
| ELVAX 4310 | : 5,5 % en poids |
| ELVAX 40 P | : 2,5 % en poids |
| Sable NE 34 | : 67 % en poids |

23.      Composition selon l'une quelconque des revendications 8 à 15, caractérisée en ce qu'elle contient :

| | |
|---|---|
| FORAL 85 | : 23 % en poids |
| ELVAX 4310 | : 7 % en poids |
| ELVAX 40 P | : 3 % en poids |
| Sable N 34 | : 67 % en poids |

24.      Composition selon l'une quelconque des revendications 8 à 15, caractérisée en ce qu'elle contient :

| | |
|---|---|
| FORAL 85 | : 20,3 % en poids |
| ELVAX 4310 | : 12,7 % en poids |
| Sable NE 34 | : 67 % en poids |

25.      Composition selon l'une quelconque des revendications 8 à 15, caractérisée en ce qu'elle contient :

| | |
|---|---|
| FORAL 85 | : 25 % en poids |
| ELVAX 40 P | : 8 % en poids |
| Sable NE 34 | : 67 % en poids |

26.      Composition selon l'une quelconque des revendications 8 à 15, caractérisée en ce qu'elle contient :

| | |
|---|---|
| STAYBELITE ESTER 10 (granulés) | : 50 % en poids |
| ELVAX 4260 (granulés) | 50 % en poids. |

27.      Composition selon l'une quelconque des revendications 8 à 15, caractérisée en ce qu'elle contient :

| | |
|---|---|
| STAYBELITE ESTER 10 (granulés) | :67 % en poids |
| ELVAX 4260 (granulés) | : 33 % en poids. |

28.      Composition selon l'une quelconque des revendications 8 à 15, caractérisée en ce qu'elle contient de plus une cire microcristalline.

29.      Composition selon l'une quelconque des revendications 8 à 15, caractérisée en ce qu'elle contient de plus de la craie.

30.        Cartouches de scellement de tiges et boulons d'ancrage caractérisées en ce qu'elles contiennent une composition selon l'une quelconque des revendications 6 à 29, ou sont directement constituées d'une telle composition.

(a)

800 600 400
900 700 500 300 200 150 90 70 60 50 40 30 20 15 10 9 8 7 5 4 3 2 1,5 1
100 80 100

(b)

0049646

1/1

### Office européen des brevets

## RAPPORT DE RECHERCHE EUROPEENNE

EP 81 40 1300.9

| Catégorie | Citation du document avec indication, en cas de besoin, des parties pertinentes | Revendica-tion concernee |
|---|---|---|
| | **DOCUMENTS CONSIDERES COMME PERTINENTS** | |
| X | FR - A - 2 136 110 (ILLINOIS TOOL WORKS INC.) <br> * revendication 12 * <br> --- | 1 |
| Y | FR - A - 2 136 119 (ILLINOIS TOOL WORKS INC.) <br> * revendication 1 * <br> --- | 1 |
| Y | DE - B - 1 257 081 (BERGWERKSVERBAND) <br> * revendication 1 * <br> -- | 1 |
| Y | GB - A - 2 007 741 (STE D'ETUDE ET DE CONSTRUCTION DE MACHINES) <br> * résumé * <br> --- | 1 |
| Y | FR - A - 2 295 286 (BATTELLE MEMORIAL INSTITUTE) <br> * revendication 1 * <br> --- | 1 |
| Y | DE - B - 1 205 038 (BERGWERKSVERBAND) <br> * revendication 1 * <br> --- | 3 |
| Y | DE - B1 - 2 723 729 (FISCHER) <br> * revendication 2 * <br> --- | 3 |
| Y | AT - B - 318 872 (CELMAC) <br> * page 4, ligne 24 * <br> --- | 3 |
| | ./.. | |

**CLASSEMENT DE LA DEMANDE (Int. Cl. 3)**

E 21 D 21/00

**DOMAINES TECHNIQUES RECHERCHES (Int. Cl. 3)**

E 21 D 20/02
E 21 D 21/00
F 16 B 13/14

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

| | Le présent rapport de recherche a été établi pour toutes les revendications | | |
|---|---|---|---|
| Lieu de la recherche <br> Berlin | Date d'achèvement de la recherche <br> 26-01-1982 | Examinateur <br> ZAPP | |

OEB Form 1503.1 06.78

**Office européen des brevets**

## RAPPORT DE RECHERCHE EUROPEENNE

| DOCUMENTS CONSIDERES COMME PERTINENTS | | | CLASSEMENT DE LA DEMANDE (Int. Cl.³) |
|---|---|---|---|
| Catégorie | Citation du document avec indication, en cas de besoin, des parties pertinentes | Revendica-tion concernée | |
| Y | AT - B - 320 940 (CELMAC)<br>* page 2, ligne 53 *<br>-- | 3 | |
| Y | US - A - 3 882 684 (MEYER et al.)<br>* revendication 5 *<br>---- | 3 | |

**DOMAINES TECHNIQUES RECHERCHES (Int. Cl.³)**

OEB Form 1503.2  06.78